# EUROPEAN PATENT APPLICATION

(11) **EP 3 113 101 A1**
(43) Date of publication of application: **04.01.2017**
(21) Application number: 15175187.2
(22) Date of filing: 03.07.2015
(51) Int. Cl.: G06Q 30/06, G06Q 20/32

(54) **METHOD OF DISPLAYING AT LEAST ONE OFFER FOR SALE OR RENT OF A PRODUCT OR SERVICE AT A USSD-CAPABLE DEVICE**

(71) Applicant: Sicap Schweiz AG, 6340 Baar (CH)
(72) Inventor: Vontz, Thomas, 8307 Ottikon (CH)
(74) Representative: Rothkopf, Ferdinand

(57) **Abstract**

According to the invention a method of displaying at least one offer for sale or rent of a product or service at a USSD-capable device of a user by means of a mobile network operating system and a mobile network operating system adapted to run such a method are provided, the method including the steps of accessing at least one computer or website written in HTML standard, obtaining the at least one offer for sale or rent of a product or service from the at least one computer or website in HTML standard, translating the at least one offer for sale or rent of a product or service obtained from the at least one computer or website from HTML standard into USSD standard, transmitting the at least one offer for sale or rent of a product or service in USSD standard to the USSD-capable device and displaying the at least one offer for sale or rent of a product or service obtained from the at least one computer or website at the USSD-capable device.

## Description

### Background of the invention

The present invention relates to a method of displaying at least one offer for sale or rent of a product or service at a USSD-capable device of a user by means of a mobile network operating system. Furthermore, the invention relates to a mobile network operating system adapted to run such a method of displaying at least one offer for sale or rent of a product or service at a USSD-capable device of a user.

### Prior Art

The USSD standard, wherein USSD means "Unstructured Supplementary Service Data", is a well known standard for mobile network operating systems, in particular for those according to the GSM communication technology ("Global System for Mobile Communication"). The USSD standard is used for transmitting information over signaling channels in order to send text only between a mobile device, more specifically a mobile phone, and an application program within the mobile network operating system. The USSD standard is quite similar to the SMS standard ("Short Message Service"), but unlike the SMS standard a USSD transaction occurs in real time without a storing and forwarding capability. Further, USSD is free of roaming and provides a multi-level menu browsing.

Nevertheless, the functionality and usability of applications in common USSD-capable devices is rather small and restricted.

### Underlying object

It is an object of the present invention to enhance the usability and functionality of the common USSD-capable devices in order to provide its users a broader range of services, in order to stimulate the usage of the devices and strengthen the proximity between mobile network operator (MNO) and customer.

### Brief summary of the invention

According to the invention the object is solved by means of a method of displaying at least one offer for sale or rent of a product or service at a USSD-capable device of a user by means of a mobile network operating system, the method including the steps of accessing at least one computer or website written in HTML standard, obtaining the at least one offer for sale or rent of a product or service from the at least one computer or website in HTML standard, translating the at least one offer for sale or rent of a product or service obtained from the at least one computer or website from HTML standard into USSD standard, transmitting the at least one offer for sale or rent of a product or service in USSD standard to the USSD-capable device and displaying the at least one offer for sale or rent of a product or service obtained from the at least one website at the USSD-capable device.

The inventive method proposes third-parties products and services from HTML websites to users of USSD devices. The invention thereby enhances the functionality of the USSD-capable devices and the corresponding mobile network operating system. Thus, the invention offers users of USSD-capable devices, in particular of mobile devices, a way to buy products and services from e-commerce computers, websites and platforms. The invention uses the benefit of an interactive access to the USSD-capable device via multi-level menu browsing. The USSD-capable device according to the invention fetches at least one offer for sale or rent of a product or service directly from at least one computer or website of a merchant. The corresponding mobile network operating system derives the offer from the HTML based website or platform and delivers it to the USSD-capable device. A website, i.e. a hypertext document, is usually written in HTML ("Hyper Text Markup Language"). For accessing such a website or platform, usually the HTTP code (Hypertext Transfer Protocol) is used.

Based on such a configuration of an application server of a corresponding mobile network operating system, according to the invention, offers for sale or rent of a product or service can be received on all kind of mobile devices, in particular on handsets. The user experiences in roaming on his USSD-capable mobile device the same offerings like at a desktop computer at home.

Furthermore, this inventive USSD service of offering products or services deriving from computers or websites is cost saving, fast and reliable. Using USSD standard signaling is cheap for the user. The user has to bear low interconnection costs only.

In addition, the browsing of USSD signals is quite quick and based on established standardization. So it can be a very reliable additional merchandise service. Furthermore, it requires no separate data connection.

In a preferred embodiment of the present invention the step of accessing the at least one computer or website written in HTML standard is initiated periodically. Addressing the relevant computer, website or platform periodically enables the corresponding mobile network operating system to receive updated data from the computer or website and to keep up with the latest offers of the respective merchant.

The step of accessing the at least one computer or website written in HTML standard further advantageously includes the steps of registering the at least one computer or website to the mobile network operating system and addressing only registered computers or websites when accessing the at least one computer or website written in HTML standard in order to obtain the at least one offer for sale or rent of a product or service. Registration of the computers or websites to be searched and considered by the mobile network operating system advantageously includes a registering of the identification of the computer or websites provider or merchant to the mobile network operating system.

For accessing the at least one computer or website written in HTML standard the invention preferably includes the steps of providing at least one attribute or tag written in HTML standard at the at least one website, each attribute indicating at least one offer for sale or rent of a product or service within the website and obtaining the at least one offer for sale or rent of a product or service from the at least one website by searching the at least one attribute within the at least one website. By tagging the relevant websites and parsing these computers or websites thereafter, as described above, relevant offers within the computers or websites can be found for forwarding those offers to USSD-capable devices. As a result, the mobile network operating system simple has to parse relevant registered websites. During parsing the attributes indicate the position of the relevant data for offers within computers or the websites.

Relevant data are in particular as follows:
- The name of the product or service to be displayed.
- A short product or service description to be displayed.
- A product or service category to be displayed.
- The price of the product or service.
- The currency used.
- The date after which the price will no longer be valid.
- Further information on availability, delivery or pickup in a store.
- The number of items available for this offer.

In a further preferred embodiment of the method according to the invention it is intended to store the at least one offer for sale or rent of a product or service in USSD standard in a database. The stored data may be accessed by the mobile network operator in a particular simple and time saving manner when preparing third-party offers of products and services to be displayed at USSD-capable devices of its mobile device users.

Specifically, the method according to the invention may also include the steps of requesting for the at least one offer for sale or rent of a product or service by means of the USSD-capable device and initiating the step of transmitting the at least one offer for sale or rent of a product or service in USSD standard to the USSD-capable device dependent on the requesting. In other words, the offering data to be displayed at a USSD-capable device according to the invention are transmitted only upon request of the user. After requesting, according to this preferred embodiment of the invention, the solution can connect to individual merchants or to main e-commerce platforms, such as Amazon, Alibaba, Magento or Shopify.

For ordering a product or service, the user preferably selects at least one product or service of interest from a list of products displayed at a menu at the USSD-capable device, wherein the at least one product or service being one of a list of several products or services displayed at the USSD-capable device as to be the at least one offer for sale or rent of a product or service at the USSD-capable device. The list of several products or services should preferably be classified, assorted or ordered in a particular manner. Therefore, the products or services may be listed in chronological order, arranged in order of relevance, or may be classified according to the distance between user and their pickup location. The mobile network operator can implicitly get the users position. Thus the mobile network operator can derive all relevant world-wide-web offers nearby the user and can provide these to the user. The system may propose nearest public service and may place personalized and geo-localized advertisement to the user. Furthermore, the system may possibly introduce advertisement with personalized ads depending on the users former purchases. The service according to the invention may also be used by physical merchants offering their products and services via corresponding computers or websites, too.

The method according to the invention further preferably includes a step of transmitting at least one order request for ordering a product or service from the USSD-capable device to a merchant running the at least one computer or website. In this attempt the user can simply order products and services from computer or website merchants via its USSD-capable device, without the need of any further order contact to the merchant. The mobile network operator procures that the order is placed at the merchant, while the merchant will be responsible for delivering the product or service to the user.

The user may pay the merchant by use of a users account at the merchant. Alternatively and according to another attempt according to the invention, the mobile network operating system should transmit at least one order confirmation for confirming the ordering of a product or service to the operator running the mobile network operating system. The mobile network operator already knows the identity of its users, i.e. their name and address. Thus, according to the invention, the user can simply use her or his account at the mobile network operator to buy products or services from third-party internet merchants. Payment of the product or services may be initiated via a billing system of the operator or via an external payment server provider (e.g., PayPal) to allow the user to choose an alternative payment mode. The system may advantageously provide an implicit authentication and one-click payment for the user. The mobile network operating system should further indicate the confirmation of the payment of its own billing system or the external billing system to the merchant.

In accordance with the advantages of the method according to the present invention mentioned above, the invention also provides a mobile network operating system adapted to run such a method of displaying at least one offer for sale or rent of a product or service at a USSD-capable device of a user.

The method and system according to the invention enable users of USSD-capable devices to simply order goods and services on web e-commerce platforms. Merchants and web retailer may sell goods and services on their web platform to anyone, even to those costumers using only USSD-capable devices. The mobile network operators may now propose further services to their users or subscribers. Thereby, this additional service can be provided for both pre-paid and post-paid subscribers.

### Brief description of the drawings

Thus described the invention in general terms, hereinafter reference will now be made to the accompanying schematical drawings, and wherein:

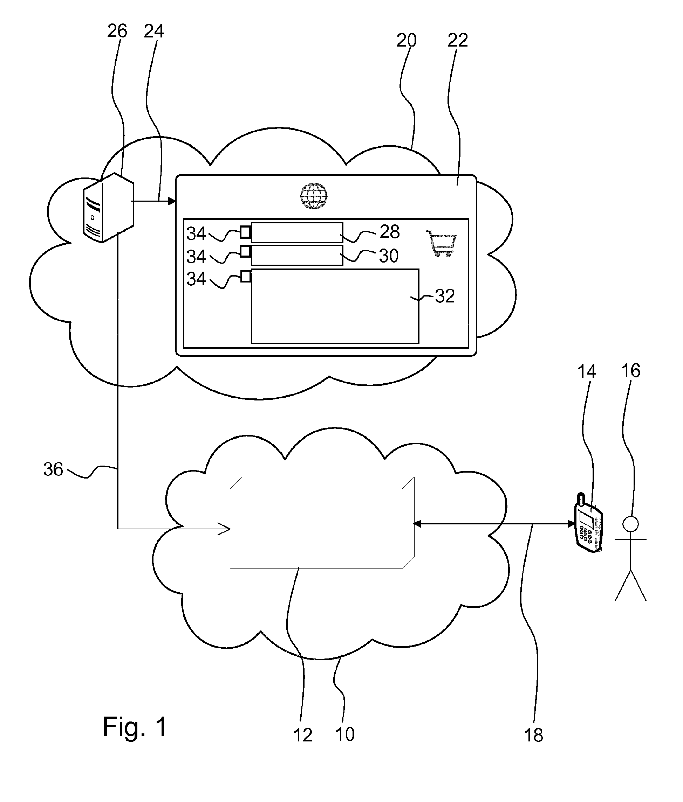

- Fig. 1: illustrates a first part of an embodiment of the method according to the invention and

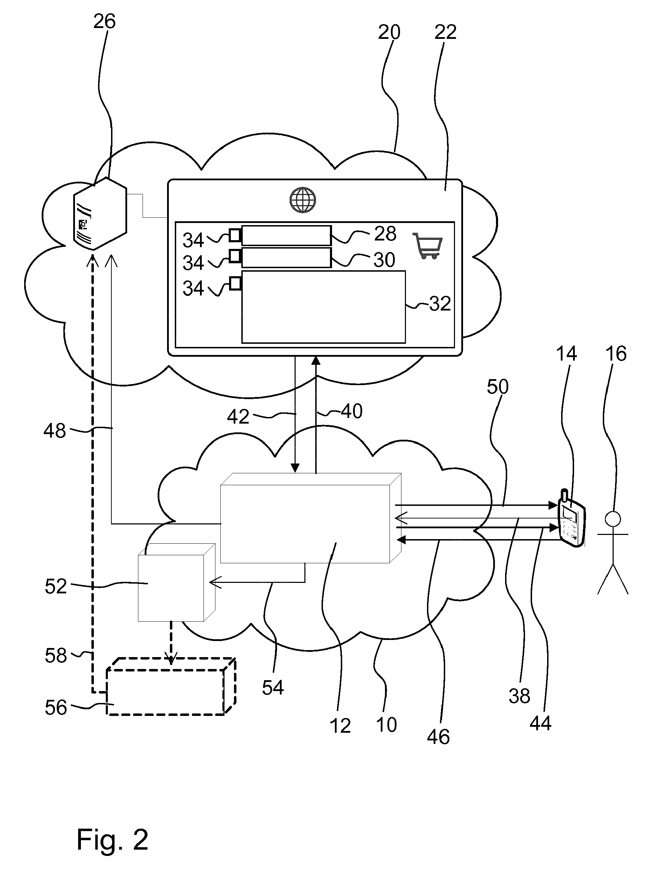

- Fig. 2: illustrates a second part of the embodiment of Fig. 1.

### Detailed description of the drawings

The present invention now will be described more fully hereinafter with reference to the accompanying drawings, in which some but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

The embodiments are described below with reference to a block diagram and flowchart illustration of a method performed using computer hardware, apparatus, systems, and computer-readable program products. It should be understood that the block diagram and flowchart illustration may be implemented in part by one or more processors executing computer-readable program instructions, e.g., as logical steps or operations of a processor in a computing system or other computing hardware components. These computer-readable program instructions are loaded onto a computer, such as a special purpose computer or other programmable data processing apparatus, to produce a specifically-configured machine, such that the instructions which execute on the computer or other programmable data processing apparatus implement the functions specified in the flowchart block or blocks.

The method of displaying at least one offer for sale or rent of a product or service described hereinafter is executed in a mobile network 10 by means of a corresponding mobile network operating system 12 running on an appropriate application server. The mobile network operating system 12 connects with a rather large number of USSD-capable devices 14 by means of a USSD standardized communication. The USSD-capable devices 14 usually are mobile phones or mobile devices which are handled by users 16 in order to correspond with other users 16 via voice and via short messages. Therefore, the USSD-capable devices 14 are able to exchange with the mobile network operating system 12 in at least one step 18 of communicating with the mobile network 10.

The method further includes the use of a World Wide Web 20, in which at least one website 22 of a merchant is provided. The website 22 is written in HTML standard and was placed into the World Wide Web 20 in a step 24 by a server or computer 26 of the merchant. The merchant offers different products and/or services on this website 22, which can be bought by customers in the World Wide Web 20. The website 22 includes in its HTML programming code several fields in which the merchant may insert information about the product or service, e.g. at least a name 28 of the respective product, a price 30 of the product and a description 32 of the product. The fields are each tagged by means of an attribute 34, wherein the attributes 34 are placed in the HTML programming code in such a way that the corresponding information can be found directly behind the respective attribute 34.

Furthermore, said method enables the merchant to sell his products and/or services for the users 16 of the USSD-capable devices 14. Therefore, the merchant registers the website 22 to the mobile network operating system 12 in a step 36. The USSD-capable device 14 is enabled to send in a step 38 a request of a user 16 in USSD standard for an offer for sale of a product. Thereupon the mobile network operating system 12 translates this request from USSD standard into HTML standard and accesses in a step 40 at least one of the computer 26 or websites 22. The mobile network operating system 12 searches through this computer 26 or website 22 and finds the relevant information by means of the attributes 34. Alternatively, the mobile network operating system may search a database of information which was compiled by searches in the computer 26 or website 22 before. Thus, the mobile network operating system 12 receives an offer for sale from the website 22 or computer 26 directly in a step 42.

The information found in the computer 26 or website 22 is translated from HTML standard into USSD standard and is transmitted as an offer to the USSD-capable device 14 in a step 44. The offer is displayed in a menu at the USSD-capable device 14 in USSD standard.

Thereafter, the user 16 may transmit an order request from the USSD-capable device 14 to the mobile network operating system 12 in a step 46. The order request is received by the mobile network operating system 12 and transmitted to the computer 26 of the merchant in a step 48. An order confirmation is transmitted to the USSD-capable device 14 in a step 50.

Furthermore, a mobile network billing system 52 is provided, to which the order confirmation is transmitted in a step 54. The mobile network billing system 52 may charge an account of the mobile network 10 of the respective user 16. Alternatively, the mobile network billing system 52 may involve an external payment gateway 56 in order to initiate a payment proceeding of the respective product bought by the user 16. After the payment proceeding is completed, the mobile network operating system 12 may confirm the payment to the merchant in a step 58.

According to this confirmation step 58 of payment, the merchant finally delivers the product to the user 16 in order to fulfill his obligation in the agreement for sale previously concluded with user 16 by means of the mobile network operating system 12.

Many modifications and other embodiments of the invention set forth herein will come to mind to one skilled in the art to which this invention pertain having benefit of the teachings presented in the foregoing description and the associated drawings. Therefore, it is to be understood that the invention is not limited to the specific embodiments disclosed to be included within the scope of the appended claims.

Although specific terms are employed herein, they are used in a generic and descriptive sense only and not for purpose of limitation. The term "website" shall mean herein any sort of server, computer or electronic offer including sales information about products or services to be sold via computer. In particular, this sales information is provided in HTML standard. Although certain methods and systems have been described herein, the scope of coverage of this patent is not limited thereto. To the contrary, various embodiments encompass various methods and systems fairly falling within the scope of the appended claims either literally or under the doctrine of equivalents.

As should be appreciated, the embodiments may be implemented in various ways, including as methods, apparatus, systems, or computer program products. Accordingly, the embodiments may take the form of an entirely hardware embodiment or an embodiment in which computing hardware, such as a processor or other special purpose devices, is programmed to perform certain steps. Furthermore, the various implementations may take the form of a computer program product on a computer-readable storage medium having computer-readable program instructions embodied in the storage medium. Any suitable computer-readable storage medium may be utilized including, but not limited to: technology based on hard disks, CD-ROMs, optical storage devices, solid state storage or magnetic storage devices.

### Reference numerals

- 10: mobile network
- 12: mobile network operating system
- 14: USSD-capable device
- 16: user
- 18: step of communicating with the mobile network
- 20: World Wide Web
- 22: website or server
- 24: step of placing the website in the World Wide Web
- 26: computer of a merchant
- 28: name of the product
- 30: price of the product
- 32: description of the product
- 34: attribute
- 36: step of registering the website to the mobile network operating system
- 38: step of requesting an offer for sale of a product
- 40: step of accessing the website or server
- 42: step of obtaining an offer for sale from the website
- 44: step of transmitting the offer to the USSD-capable device
- 46: step of transmitting an order request to the mobile network operating system
- 48: step of transmitting the order request to the merchant
- 50: step of transmitting an order confirmation to the USSD-capable device
- 52: mobile network billing system
- 54: step of transmitting the order confirmation to the mobile network billing system
- 56: external payment gateway
- 58: step of confirming the payment to the merchant

## Claims

1. A method of displaying at least one offer for sale or rent of a product or service at a USSD-capable device (14) of a user by means of a mobile network operating system (12),
the method including the steps of:
- Accessing (40) at least one computer (26) or website (22) written in HTML standard,
- obtaining (42) the at least one offer for sale or rent of a product or service from the at least one computer (26) or website (22) in HTML standard,
- translating the at least one offer for sale or rent of a product or service obtained from the at least one computer (26) or website (22) from HTML standard into USSD standard,
- transmitting (44) the at least one offer for sale or rent of a product or service in USSD standard to the USSD-capable device (14) and
- displaying the at least one offer for sale or rent of a product or service obtained from the at least one website at the USSD-capable device (14).

2. The method according to claim 1,
in which the step of accessing (40) the at least one computer (26) or website (22) written in HTML standard is initiated periodically.

3. The method according to claim 1 or 2,
in which the step of accessing (40) the at least one computer (26) or website (22) written in HTML standard includes the steps of:
- Registering (36) the at least one computer (26) or website (22) to the mobile network operating system (12) and
- addressing only registered computers (26) or websites (22) when accessing the at least one computer (26) or website (22) written in HTML standard in order to obtain the at least one offer for sale or rent of a product or service.

4. The method according to one of claims 1 to 3,
in which the step of accessing (40) the at least one computer (26) or website (22) written in HTML standard includes the steps of:
- Providing at least one attribute (34) written in HTML standard at the at least one computer (26) or website (22), each attribute (34) indicating at least one offer for sale or rent of a product or service within the computer (26) or website (22) and
- obtaining (42) the at least one offer for sale or rent of a product or service from the at least one computer (26) or website (22) by searching the at least one attribute (34) within the at least one computer (26) or website (22).

5. The method according to one of claims 1 to 4,
including the step of:
- Storing the at least one offer for sale or rent of a product or service in USSD standard in a database.

6. The method according to one of claims 1 to 5,
including the steps of:
- Requesting (38) for the at least one offer for sale or rent of a product or service by means of the USSD-capable device (14) and
- Initiating the step of transmitting (44) the at least one offer for sale or rent of a product or service in USSD standard to the USSD-capable device (14) dependent on the requesting.

7. The method according to claim 6,
wherein the step of requesting (38) for the at least one offer for sale or rent of a product or service includes a selecting of at least one product of interest for the user from a list of products displayed at the USSD-capable device (14), wherein the at least one product or service being one of a list of several products or services displayed at the USSD-capable device (14) as to be the at least one offer for sale or rent of a product or service at the USSD-capable device (14).

8. The method according to one of claims 1 to 7,
including the step of:
- Transmitting (48) at least one order request for a product from the USSD-capable device (14) to a merchant running the at least one computer (26) or website (22).

9. The method according to one of claims 1 to 8,
including the step of:
- Transmitting (54) at least one order confirmation for confirming the ordering of a product to a billing system (52) of the mobile network operating system.

10. Mobile network operating system (12) adapted to run a method of displaying at least one offer for sale or rent of a product or service at a USSD-capable device (14) of a user (16) according to one of claims 1 to 9.
